Europäisches Patentamt

(19) European Patent Office

Office européen des brevets

(11) Publication number: **0 028 661**

**B1**

(12)        EUROPEAN PATENT SPECIFICATION

(45) Date of publication of patent specification: **26.10.83**

(51) Int. Cl.³: **G 01 M 19/00** // F 16 K 17/00

(21) Application number: **79104473.8**

(22) Date of filing: **13.11.79**

(54) Apparatus for periodically testing the operation of safety valves, and safety valve.

(43) Date of publication of application:
**20.05.81 Bulletin 81/20**

(45) Publication of the grant of the patent:
**26.10.83 Bulletin 83/43**

(84) Designated Contracting States:
**AT BE CH DE FR GB NL SE**

(56) References cited:
**BE - A - 869 173**
**DE - A - 1 937 198**
**DE - C - 800 445**
**US - A - 4 152 932**

(73) Proprietor: **Furmanite International Limited**
**Furman House Shap Road**
**Kendal Cumbria LA9 6RU (GB)**

(72) Inventor: **Trevisan, Ottavio**
**Via Milano 18**
**I-30170 Mestre (Venezia) (IT)**

(74) Representative: **Dodd, David Michael et al,**
**ROYSTONS 531 Tower Building Water Street**
**Liverpool L3 1BA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Apparatus for periodically testing the operation of safety valves, and safety valve

This invention relates to an apparatus for periodically testing the operation of safety valves and to a safety valve.

As is known, a requisite of current safety regulations is that the safety valves of pressure apparata or vessels be periodically tested to strict standards.

Safety valves are known to be held in their closed position by a calibrated spring, such as to allow the valve to open as a preset pressure, acting on the poppet member of the valve, is reached, the poppet member being usually a closure valve member which is movable to open against a closure spring and cooperates with a valve seat.

The safety valve test consists of checking that the valve actually opens at a preset value of the pressure.

Such tests were carried out, heretofore, sometimes by gradually increasing the pressure within the pressure apparatus or vessel the valves whereof had to undergo testing, until the maximum preset pressure level was reached. This involved, of course, considerable inconvenience because the normal operation had to be discontinued and the pressurized apparatus or vessel subjected to pressures significantly in excess of the normal operating pressure, with attendant appreciable strain of the materials. Moreover, an increased energy consumption was involved in raising the vessel pressure. Furthermore, as a result of industrial apparata or vessels often including more than one safety valve, each valve being set for different levels, it became necessary to block all those valves which happened to be set for a lower pressure than the test pressure, which obviously involved complications of not negligible importance. Bench tests have evident drawbacks.

This invention sets out to obviate the drawbacks indicated hereinabove.

To solve this problem, it has been started from the awareness that, by removing the cover of a safety valve, it becomes possible to manipulate the poppet stem from the outside, such as to open the valve through the application of a given force to the stem in the valve opening direction, thereby overcoming the resistance of the valve closing spring.

Therefore, the problem arose of how to accurately determine the magnitude of said externally applied force at the moment the valve opened. Based upon said magnitude and the pressure acting within the vessel on the valve poppet member being known, it would be possible to calculate in a simple manner the inside pressure required to open the safety valve, if the latter were only subjected to the vessel internal pressure.

As mentioned already, the main problem encountered in practicing this concept was that of an accurate determination of the force applied to the valve poppet stem at the moment the valve opens.

Attempts, as for example disclosed in BE—A—869173 have been made to utilize, for the purpose indicated, the force delivered by a hydraulic cylinder-piston assembly, the fluid pressure whereof was measured at the moment the valve being tested popped out or opened. However, this approach implied considerable errors and shortcomings, since pneumatic assemblies take up 15—20% and hydraulic 2—5% of the force generated, not to mention errors in calculating the active area of the piston.

It is an object of this invention to solve the problem of providing an apparatus effective to create a force, applying said force to the valve under test, and measuring the magnitude of said force regardless of the device which generates it.

According to one aspect of this invention there is provided an apparatus for periodically testing the operation of safety valves in a pressurised system during normal operation of the pressurised system, comprising a load-bearing structure fixedly arranged with respect to the pressurised system at the position of one of said safety valve, means for gripping (13) said safety valve, a thrust-generating assembly (7) intercoupling said means for gripping and said load-bearing structure and serving to apply thrust that moves said means for gripping in a direction relative to said load-bearing structure that opens said one safety valve, and means for controlling said thrust-generating assembly (7) first to open said one safety valve and then gradually to reduce thrust to allow said one safety valve to close itself, characterised in that there is provided a dynamometer device (9) associated with the thrust-generating assembly (7) to produce an output that measures the thrust applied by thrust-generating assembly (7) at unseating and reseating of said one safety valve being tested.

According to another aspect of the invention there is provided a safety valve in a pressurised system as claimed in claim 7.

The invention will be more clearly described with reference to two exemplary embodiments of the invention, illustrated by way of example in the accompanying drawings, where:

Figure 1 schematically illustrates a first embodiment of the invention;

Figure 2 shows schematically a second embodiment of the invention; and

Figures 3 and 4 show some details.

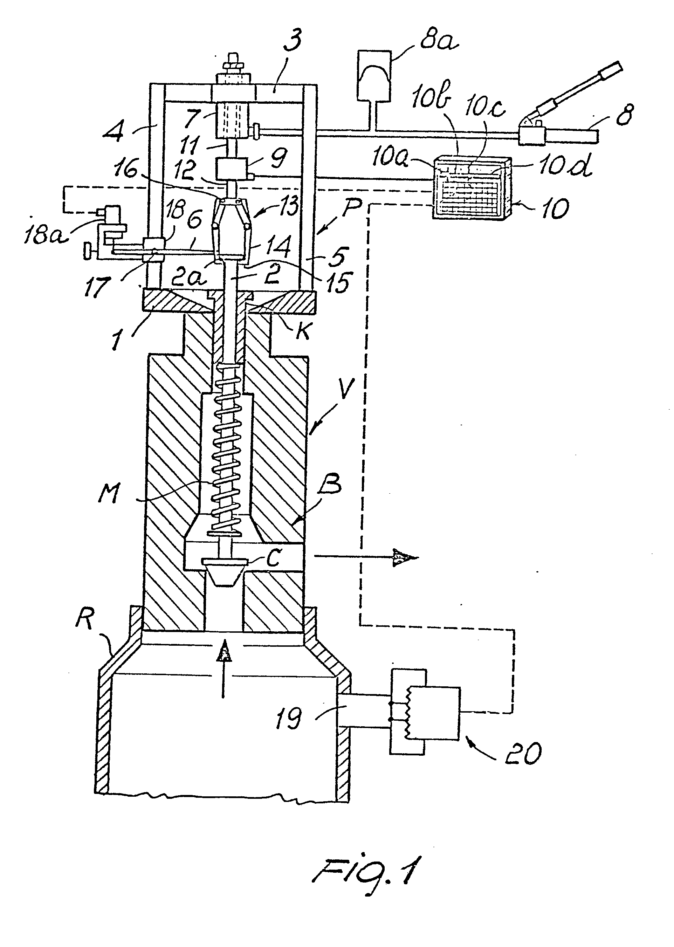

With reference to Figure 1, a safety valve V comprises a housing B, a poppet member C, a spring M urging the poppet member to the closed position, a bushing K rigid with the housing B, and a stem 2 protruding out of the housing B and slidable in the fixed bushing K. The valve is mounted to the pressure vessel R and is shown with its cover removed, preparatory to the application of the apparatus of this invention. The load-bearing structure of that apparatus is indicated generally at P and is in the form of a yoke comprising a clamping collar 1 at its lower or bottom end, which collar on one side contacts the top surface of the housing B of the valve, and on the other side is clamped against the bushing K, such as to maintain the load-bearing structure P in a fixed position. The yoke P shown is manufactured by Enerpack Division of Applied Power Industries, Inc. of Butler, Wisconsin, U.S.A., and is marketed under Model No. BHP 281 (single clamp); thus, it is considered that a more detailed description of such a yoke is unnecessary here, it being sufficient to mention that in addition to the clamping collar 1, it comprises uprights 4 and 5 and an upper or top cross-member 3. The cross-member 3 carries the cylinder-piston assembly 7, of the hydraulic type, which is hydraulically connected to a pump 8. The cylinder-piston assembly 7 is also manufactured by Enerpack Division of that same US Company, and is sold under Model No. RCH-121 A, while the pump 8, also from the same Company, is sold under Model No. P-39 for one speed, and can operate at hydraulic pressures of up to 700 atmospheres. Thus, it is considered that no further details are required herein it being sufficient to remark that the rod 11 of the cylinder-piston assembly 7 can be displaced axially within the cylinder of the assembly 7 as a result of the fluid pressure created by the pump 8. The free end of the rod 11 is connected to one end of a strain gauge 9 operating on the basis of changes in the electric resistor container therein. This strain gauge may be a load cell "U$_2$ cell" from Hottinger Baldwin Messtechnik DBR, and it is considered unnecessary to provide further illustration of it, it being sufficient to note herein that its electric resistor is fed from a battery supply incorporated therein and that to the opposite side whereto the rod 11 is attached there is connected a column 12 of an articulated jaw gripping device, generally indicated at 13, the articulated jaws 14 whereof are provided at the bottom with hooked ends 15.

The gripping device 13 is made as an adaptation to an extractor of the cited Enerpack Division, and constructional details thereof are to be found in the Company's Catalogue, where it is described as Model No. HP 283, three-jaw type. It will be sufficient to remind herein that the articulated gripping members at the bottom end of the column 12, which end is in the form of a ring 16, are so configurated that, as the column 12 is thrust upwards, the lower ends 15 of the clamps 14 are urged towards one another, thus tending to increase the clamping force applied to the head 2a of the stem 2 of the valve V. As the axial upward thrust decreases the clamping force is released and the valve 2 is allowed to slide downwardly.

Turning back to the strain gauge 9, as is known when to its operative ends a tension or a compression is applied, the resistance therein changes, thereby the parameters of the electric current through its electric circuit also change, from the changing of such parameters it being possible to determine the tension or compression force applied to the opposite operative ends of the gauge. In the example shown, the strain gauge 9 is connected to a suitably modified recorder 10 of the potentiometer type, of the Esterline Angus Instrument Corporation of Indianapolis, Indiana, U.S.A., and designated "Miniservo III Bench" under Model No. MS 413 B. This modified recorder, therefore, will not be any further described, it being sufficient to observe herein that it is provided with graduations and pointers which read the magnitude of the tensile or compressive force applied to the strain gauge 9 itself, as well as other values and is adapted to the mentioned transducers.

The apparatus further includes a rocker arm type of rod 6, pivoted at 17 to a sleeve 18 which is frictionally slidable along the upright 4 of the yoke P. The pivot 17 is also of the friction adjustable type and adjustable in position, such as to allow the pivot to be shifted transversally in order to adapt it for the mutual positioning of the components and related tolerances. The rocker arm rod 6 is used to detect the displacement movements of the valve, and for this purpose, there is provided on the opposite end to the end contacting the valve a displacement transducer manufactured by Shaevitz EM Ltd., Slough, Great Britain, and designated in their Catalogue with Model No. E 100. This displacement transducer 18 is connected, in a manner known *per se*, to the recorder 10, which is equipped with an additional scale with pointer reading the valve displacement movements as well.

Normally, the pressure apparatus or vessel will be equipped with a pressure gauge indicating the internal pressure level thereof. The invention provides that, to the gauge fitting 19, a pressure transducer 20 is connected which can also be electrically connected to the recorder 10, which recorder can be advantageously provided with a further scale and pointer reading the pressure level as measured inside the pressure gauge. The pressure transducer 20 employed herein is of the "P 723" type, manufactured in Great Britain by Shaevitz.

The apparatus described in the foregoing operates as follows.

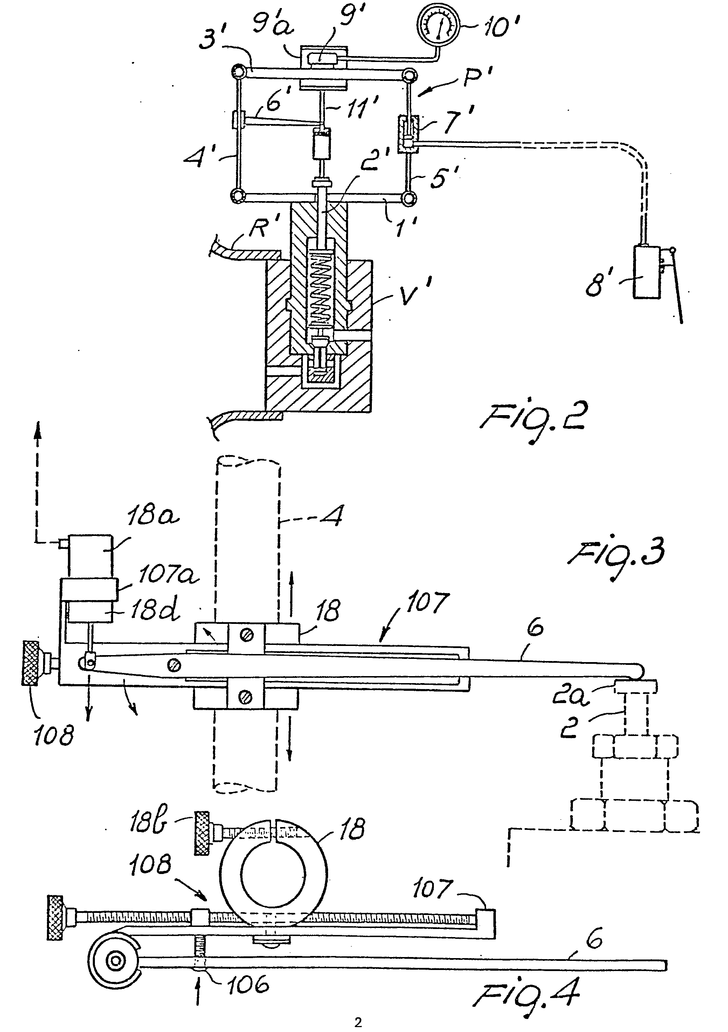

The pressurized vessel R is allowed to retain its normal operating pressure. The cover of the safety valve is removed and the yoke P installed by tightening the clamping collar 1 against the bushing K. Then the gripping device 13 is caused to grip the head 2a of the stem 2 of the valve. The tip of the rod 6 is made to rest on the center of the head 2a of the stem, and the sleeve 18 is positioned such that the rod 6 is preferably horizontal and transducer 18a zeroed. Then, the setscrew 18*b* (see Figure 4) of the sleeve 18 is tightened. The pressure transducer 20 is finally mounted to the gauge fitting 19 and connected to the recorder 10.

The apparatus is now ready to operate, it being actuated by operating the pump 8 which will deliver oil under pressure into the cylinder-piston assembly 7. The oil pressure in that cylinder, by acting on the related piston, will impart an upwardly directed thrust to the rod 11 of the piston, which rod acts on the strain gauge 9 to create expansion of the latter as due to the reaction to the raising movement produced by the column 12 of the gripping device 13 attached to the stem 2 of the valve. The strain gauge 9 will sense, through electrical parameters provided therein, the magnitude of the tensile force applied thereto, and pass the related signals to the recorder 10 the pointer 10*a* whereof reads on the scale 10*b* the magnitude of the tensile force thus generated. The pressure in the hydraulic circuit is raised by means of the pump 8 until the magnitude of the related thrust acting on the stem 11, and consequently on the strain gauge 9, through the gripper 13 on the stem 2 of the safety valve, reaches pop out values, i.e. a level which results in the safety valve opening. This level or value is graphically recorded, in a manner known *per se*, by the recorder 10 with very high precision. Simultaneously with the opening of the safety valve V, the rod 6 will detect the displacement of the poppet member C of the valve, by swinging about the frictionally adjustable pivot 17 thereof and actuating with its opposite end to the one contacting the stem 2 the displacement movement transducer 18*a*, which will measure, through electrical parameters, the displacement occurred and signal it to the recorder 10, which indicates, by means of the pointer 10*c* along the scale 10*d*, the amount of said displacement. At the same time, the pressure transducer 20 electrically signals to the recorder 10 the value or level of the pressure inside the vessel R, which value is displayed and recorded in a manner known *per se* by the recorder 10.

Thus, the three mechanical parameters involved in the valve pop out action can be read. Through such measured values, the active closure area of the valve V being known, it becomes easy to calculate the effective opening pressure of the safety valve under test, the value whereof can be thus compared with the standard setting of the safety valve.

In order to ascertain the so-called "blow-down", or closure variation of the valve, the pressure in the hydraulic circuit is gradually decreased until the safety valve V closes, the recorder 10 recording the magnitude of the corresponding thrust force, thus affording the possibility of calculating the closure pressure variation as based upon the difference between the calibration pressure and the closing pressure.

It will be apparent how the apparatus further affords control of the valve maximum lift.

In the embodiment shown in Figure 2, equivalent component parts have been designated with the same reference numerals as in Figure 1, but for the addition of an apostrophe. Therefore, such parts will not be further explained, because clearly deducible from the description given for Figure 1.

It will be noted that in the second embodiment of the invention the yoke has been replaced with an articulated parallelogram P', which allows the apparatus to be adjusted sideways. Moreover, the cylinder-piston assembly 7' is mounted to the upright 5' which is divided in two sections, one section being rigid with the piston rod and the other section with the cylinder of the assembly 7'. It will be noted, moreover, that the force from the assembly 7' is transferred to the strain gauge 9' through the cross-member 3', which also functions as a lever. Furthermore, owing to the interposition of a bracket 9*a*', the strain gauge is caused to operate in compression.

Figures 3 and 4 illustrate the valve displacement measuring device, respectively in elevation and plan views. From the drawing, it is apparent that the rod 6 is pivoted at the pivot 106, which is carried by a bracket 107, which is in turn carried by the sleeve 18 through a threaded shaft 108. This mechanism permits the pivot 106 to be shifted sideways with respect to the upright 4 by turning the threaded shaft 108 threadably in or out. This displacement of the pivot 106 occurs rigidly with the rod 6 and displacement transducer 18*a* carried by the bracket 107, such that the free end of the rod 6 can be positioned as desired on the head 2*a* of the valve without altering the lever arms of the rod itself with respect to the pivot 106 and transducer 18*a*, the oscillation ratio of the rod ends not being influenced by the sideway displacement of the assembly, if it is remembered that the stem 18*d* of the sliding movement transducer can be shifted axially, the collar 107*a* of the bracket 107 leaving said shifting movement unimpeded.

In the hydraulic circuit which from pump 8 leads to the power unit 7 a plenum chamber or pressure accumulator 8*a* is advantageously inserted. Such plenum chamber may be of the kind provided with nitrogen pocket or compression chamber and is destined to supply the necessary pressure to the circuit, when such pressure abruptly lowers at the instant the safety valve opens. Owing to this plenum chamber 8*a* the sinking of the pressure in the line is gradual and abrupt oscillations thereof adversely influencing the graphic recording of the recorder 10 are avoided.

## Claims

1. An apparatus for periodically testing the operation of safety valves in a pressurized system during normal operation of said pressurised system, comprising a load-bearing structure (P) fixedly arranged with respect to the pressurised system at the position of one of said safety valves, means for gripping (13) said one safety valve, a thrust-generating assembly (7) intercoupling said means for gripping and said load-bearing structure and serving to apply thrust that moves said means for gripping in a direction relative to said load-bearing structure that opens said one safety valve, and means (8) for controlling said thrust-generating assembly (7) first to open said one safety valve and then gradually to reduce thrust to allow said one safety valve to close itself, characterised in that there is provided a dynamometer device (9) associated with the thrust-generating assembly (7) to produce an output that measures the thrust applied by the thrust-generating assembly (7) at unseating and reseating of said one safety valve being tested.

2. An apparatus according to claim 1, characterised in that the load-bearing structure comprises a yoke (P) having a clamping collar (1), uprights (4, 5) extending substantially perpendicular to said collar, and a cross-member (3) substantially parallel to said collar (1) and interconnecting the uprights (4, 5), the thrust-generating assembly (7) being attached to said cross-member, the means (13) for gripping said one safety valve being connected to one end of the dynamometer device (9), said dynamometer device (9) being connected with its other end to the thrust-generating assembly (7) and located between the thrust-generating assembly (7) and said gripping means (13).

3. An apparatus according to Claims 1 and 2, characterised in that the thrust generating assembly (7), the dynamometer device (9) and the gripping means (13) are all aligned to one another and coaxial with the stem (2) of said one safety valve.

4. An apparatus according to Claims 1 to 3, characterised in that the dynamometer device (9) is connected to a recorder for recording the signals from the dynamometer device.

5. An apparatus according to Claims 1 to 4, characterised in that there is provided a displacement movement measuring device (6, 17, 18), said displacement movement measuring device comprising a sleeve (18) adjustably secured to one (4) of the yoke (P) uprights, said sleeve having a pivot whereto a rod (6) is mounted pivotally which contacts with one of its ends the stem (2) of said one safety valve, its other end being connected to a displacement movement transducer (18a), in turn connected to the recorder (10) for passing to the latter signals corresponding to displacement movements of the valve stem.

6. An apparatus according to Claims 1 to 5, characterised in that on the pressure vessel a gauge fitting is provided whereto a pressure transducer (20) is mounted which is connected to the recorder (10).

7. A safety valve in a pressurised system comprising a housing with passages for the pressurised fluid, a valve seat, and a poppet member (C) cooperating with the valve seat and including a stem (2) protruding out of the housing (B), as well as a spring (M) urging the poppet member (C) to close, characterised in that to the housing (B) of said valve there is mounted the apparatus according to any of Claims 1 to 6.

8. An apparatus according to Claim 5, characterised in that the pivotal mount of the rod (6) to the sleeve (18) comprises a bracket (107) carrying the pivot (106) of the rod and being displaceable sideways with respect to the sleeve (18) by means of a screw type of coupling (108).

**Patentansprüche**

1. Vorrichtung zum periodischen Testen der Funktion von Sicherheitsventilen eines unter Druck stehenden Systems, während der normalen Funktion des unter Druck stehenden Systems, mit einer Trageinrichtung, die in bezug auf das unter Druck stehende System bei einem der Sicherheitsventile fixiert angeordnet ist, mit Einrichtungen, um dieses eine Sicherheitsventil zu fassen, einen Bausatz zur Schuberzeugung, der die Einrichtung zum Fassen des Sicherheitsventiles und die Trageinrichtung verbindet und dazu dient, einen Schub auszuüben, der die Einrichtung zum Fassen relativ zur Trageinrichtung in einer Richtung bewegt, um das Sicherheitsventil zu öffnen und Einrichtungen, um den Bausatz zur Schuberzeugung (7) zu steuern, um zuerst das Sicherheitsventil zu öffnen und dann allmählich den Schub zu vermindern, um dem Sicherheitsventil zu ermöglichen, sich zu schließen, dadurch gekennzeichnet, daß ein Kraftmesser (9) vorgesehen ist, der der Einrichtung (7) zur Schubausübung zugeordnet ist und den von der Einrichtung (7) zur Schuberzeugung während des Abhebens und Wiederaufsetzens des getesteten Sicherheitsventiles ausgeübten Schub mißt.

2. Vorrichtung nach Anspruch 1, dadurch gekennzeichnet, daß die Trageinrichtung ein Joch (P) aufweist, welches eine Klemmzwinge (1), im wesentlichen senkrecht von der Klemmzwinge (1) abstehende Ständer (4, 5) und einen Querträger (3), der im wesentlichen parallel zur Klemmzwinge (1) ist und die Ständer (4, 5) verbindet, hat, wobei die Einrichtung (7) fur Schuberzeugung am Querträger befestigt ist, und daß die Einrichtungen (13) zum Fassen des Sicherheitsventiles mit einem des Kraftmessers (9) verbunden sind und der Kraftmesser (9) mit seinem anderen Ende mit der Einrichtung (3) zur Schuberzeugung verbunden und zwischen der Einrichtung (7) zur Schuberzeugung und den Einrichtungen (13) zum Fassen des Sicherheitsventiles angeordnet ist.

3. Vorrichtung nach den Ansprüchen 1 und 2, dadurch gekennzeichnet, daß die Einrichtung (7) zur Schuberzeugung, der Kraftmesser (9) und die Einrichtungen (13) zum Fassen des Sicherheitsventils zueinander ausgerichtet und koaxial zum Stiel (2) des Sicherheitsventiles sind.

4. Vorrichtung nach den Ansprüchen 1 bis 3, dadurch gekennzeichnet, daß der Kraftmesser (9) an einem Registrierapparat angeschlossen ist, um die Signale des Kraftmessers (9) zu registrieren.

5. Vorrichtung nach den Ansprüchen 1 bis 4, dadurch gekennzeichnet, daß eine Versetzungsmeßeinrichtung (6, 17, 18) vorgesehen ist und daß die Versetzungsmeßeinrichtung eine Buchse (18) aufweist, die verstellbar an einem der Ständer befestigt ist, mit einem Gelenkzapfen, auf dem eine Stange (6) kippbar gelagert ist, welche mit einem ihrer Enden mit dem Stiel (2) des Sicherheitsventiles in Berührung ist und deren anderes Ende mit einem Meßwandler (18a) für eine Versetzungsbewegung verbunden ist, welcher seinerseits an den Registrierapparat (10) angeschlossen ist, um an diesen Signale entsprechend der Versetzungsbewegung de Ventilstieles zu leiten.

6. Vorrichtung nach den Ansprüchen 1 bis 5, dadurch gekennzeichnet, daß am Druckgefäß ein Meßinstrumentanschluß vorgesehen ist, auf dem ein Druckwertumwandler (20) montiert ist, der mit dem Registrierapparat (10) verbunden ist.

7. Ein Sicherheitsventil in einem unter Druck stehenden System, mit einem Gehäuse mit Durchlässen für das unter Druck stehende Fluid, einem Ventilsitz und Ventilteller (C), der mit dem Ventilsitz zusammenwirkt und einem Stiel (2), der aus dem Gehäuse (B) herausragt, sowie einer Feder (1), die den Ventilteller (C) in die Schließstellung drückt, dadurch gekennzeichnet, daß auf dem Gehäuse (B) des Ventiles eine Vorrichtung gemäß einem der Ansprüche 1 bis 6 montiert ist.

8. Vorrichtung nach Anspruch 5, dadurch gekennzeichnet, daß das Kipplager der Stange (6) an der Buchse (18) einen Tragarm (107) aufweist, der den Lagerzapfen (106) der Stange trägt und in bezug auf die Buchse (18) mittels einer Schraubenverbindung (108) seitlich versetzbar ist.

**Revendications**

1. Un appareil pour tester périodiquement le fonctionnement de soupapes de sûreté entrant dans un système pressurisé pendant le fonctionnement normal du système pressurisé, comprenant une structure support de charge (P) disposée de manière fixe par rapport au système pressurisé à l'emplacement d'une desdites soupapes de sûreté, un moyen (13) de prise de ladite soupape de sûreté, un ensemble générateur de poussée (7) accouplant l'un à l'autre ledit moyen de prise et ladite structure support de charge et servant à appliquer une poussée qui déplace ledit moyen de prise dans la direction par rapport à ladite structure support de charge qui ouvre ladite soupape de sûreté, et un moyen (8) pour commander ledit ensemble générateur de poussée (7) d'abord pour ouvrir ladite soupape de sûreté puis pour réduire progressivement la poussée afin de permettre à ladite soupape de sûreté de se fermer, caractérisé en ce qu'il est prévu un instrument dynamométrique (9) associé à l'ensemble générateur de poussée (7) pour produire un signal de sortie qui mesure la poussée appliquée par l'ensemble générateur de poussée (7) lorsque ladite soupape de sûreté en cours d'essai quitte le contact et reprend contact avec son siège.

2. Un appareil selon la revendication 1, caractérisé en ce que la structure support de charge comprend un étrier (P) ayant un collier de serrage (1), des montants (4, 5) s'étendant sensiblement perpendiculairement audit collier, et une traverse (3) sensiblement parallèle audit collier (1) et reliant l'un à l'autre les montants (4, 5), l'ensemble générateur de poussée (7) étant fixé à ladite traverse, le moyen (13) de prise de ladite soupape de sûreté étant relié à une extrémité du dispositif dynamométrique (9), ledit dispositif dynamométrique (9) étant relié par son autre extrémité à l'ensemble générateur de poussée (7) et situé entre l'ensemble générateur de poussée (7) et ledit moyen de prise (13).

3. Un appareil selon les revendications 1 et 2, caractérisé en ce que l'ensemble générateur de poussée (7), le dispositif dynamométrique (9) et le moyen de prise (13) sont tous en alignement et coaxiaux à la tige (2) de ladite soupape de sûreté.

4. Un appareil selon les revendications 1 à 3, caractérisé en ce que l'instrument dynamométrique (9) est relié à un enregistreur pour l'enregistrement des signaux provenant de l'instrument dynamométrique.

5. Un appareil selon les revendications 1 à 4, caractérisé en ce qu'il est prévu un dispositif de mesure du mouvement de déplacement (6, 17, 18), ledit dispositif de mesure du mouvement comprenant un manchon (18) fixé de manière réglable à l'un (4) des montants de l'étrier (P), ledit manchon ayant un axe d'articulation sur lequel est articulée une tige (6) qui contacte par l'une de ses extrémités la tige (2) de ladite soupape de sûreté, son autre extrémité étant reliée à un transducteur de mouvement de déplacement (18a), lui-même relié à l'enregistreur (10) pour transmettre à ce dernier des signaux correspondant aux mouvements de déplacement de la tige de soupape.

6. Un appareil selon les revendications 1 à 5, caractérisé en ce que, sur le réservoir sous pression, est prévu un embout de manomètre sur lequel est monté un transducteur de pression (20) qui est relié à l'enregistreur (10).

7. Une soupape de sûreté montée dans un système pressurisé comprenant une boîte munie de passages pour le fluide pressurisé, un siège de soupape et un clapet (C) coopérant avec le siège de soupape et comportant une tige (2) dépassant hors de la boîte (B), ainsi qu'un ressort (M) tendant à fermer le clapet (C), caractérisée en ce que, sur la boîte (B) de ladite soupape, est monté le dispositif selon l'une quelconque des revendications 1 à 6.

8. Un appareil selon la revendication 5, caractérisé en ce que le montage articulé de la tige (6) sur le manchon (18) comprend un support coudé (107) portant l'axe d'articulation (106) de la tige et pouvant être déplacé latéralement par rapport au manchon (18) au moyen d'un accouplement (108) du type à vis.

Fig.1

0 028 661

Fig.2

Fig.3

Fig.4

2